# EUROPEAN PATENT APPLICATION

(11) **EP 4 746 126 A1**
(43) Date of publication of application: **20.05.2026**
(21) Application number: 25194093.8
(22) Date of filing: 05.08.2025
(51) Int. Cl.: H01M 10/613, H01M 10/6556, H01M 10/625, H01M 10/647, H01M 10/6567, H01M 50/209, H01M 50/24, H01M 50/242, H01M 50/383, H01M 50/342, H01M 50/367

(54) **BATTERY ASSEMBLY**

(30) Priority: 19.11.2024 KR 20240165463
(71) Applicant: SK On Co., Ltd., Seoul 03161 (KR)
(72) Inventor: JANG, Sun Ho, 34124 Daejeon (KR); KIM, Ji San, 34124 Daejeon (KR); PAIK, Hyung Ju, 34124 Daejeon (KR); JEON, Hae Ryong, 34124 Daejeon (KR)
(74) Representative: Prüfer & Partner mbB Patentanwälte · Rechtsanwälte

(57) **Abstract**

The present disclosure relates to a battery assembly comprising: a plurality of battery cells; a receiving case forming a receiving space configured to accommodate the plurality of battery cells and an auxiliary space disposed apart from the receiving space; a receiving bottom side forming a bottom side of the receiving space and disposed between the receiving space and the auxiliary space; a body bottom side disposed apart from and facing the receiving bottom side to form a bottom side of the auxiliary space; a flow path disposed in the auxiliary space and in contact with the receiving bottom side; and a reinforcement portion disposed outside the flow path in the auxiliary space and configured to support the receiving bottom side and the body bottom side.

## Description

### BACKGROUND OF THE INVENTION

### 1. Field

The present disclosure relates to a battery assembly. More specifically, it relates to a battery assembly with improved structural stability.

### 2. Description of the Related Art

A conventional Cell-to-Pack (CTP) battery assembly includes a plurality of battery cells and a receiving case that forms a receiving space for accommodating the plurality of battery cells. However, considering the load applied by the battery cells and the cost of manufacturing the battery assembly, the structural rigidity of the bottom side of the receiving case tends to be weaker than that of the side and upper surfaces of the receiving case.

Accordingly, impact transmitted through the bottom side of the receiving case may trigger thermal runaway of the battery cells. Since this is directly related to the safety of the product in which the battery assembly is used (for example, an electric vehicle), it is necessary to reinforce the bottom side of the receiving case.

### SUMMARY OF THE INVENTION

According to one aspect of the present disclosure, an objective is to improve the structural stability of the battery assembly.

According to another aspect of the present disclosure, an objective is to protect the battery assembly from vibrations or impacts that may be applied to the bottom side of the battery assembly.

According to yet another aspect of the present disclosure, an objective is to improve the thermal stability of the battery assembly.

According to still another aspect of the present disclosure, an objective is to utilize the space of the battery assembly efficiently.

The present disclosure may be widely applied in the field of green technology such as electric vehicles, battery charging stations, energy storage systems (ESS), and other battery-based photovoltaics and wind power. In addition, the battery inspection apparatus according to the present disclosure may be used for eco-friendly mobility, including electric vehicles and hybrid vehicles, to prevent climate change by restraining air pollution and greenhouse gas emissions.

As a technical means to achieve the technical objects, a battery assembly according to the present disclosure may comprise a plurality of battery cells; a housing case forming a receiving space configured to accommodate the plurality of battery cells, and an auxiliary space disposed apart from the receiving space; a receiving bottom side forming a bottom side of the receiving space and disposed between the receiving space and the auxiliary space; a body bottom side disposed apart from the receiving bottom side and facing the receiving bottom side to form a bottom side of the auxiliary space; a flow path disposed in the auxiliary space and in contact with the receiving bottom side; and a reinforcement portion disposed outside the flow path in the auxiliary space and configured to support the receiving bottom side and the body bottom side.

In one embodiment, the reinforcement portion may include a wavy-shaped reinforcement member disposed in the auxiliary space and in contact with the receiving bottom side and the body bottom side.

In one embodiment, the flow path may include a cooling flow path formed along the wavy-shaped reinforcement member to circulate a refrigerant.

In one embodiment, the battery assembly according to the present disclosure may further comprise a through-hole penetrating the receiving bottom side; and an exhaust port penetrating the receiving case, wherein the flow path may include a venting flow path formed along the wavy-shaped reinforcement member, and the venting flow path may communicate the receiving space with the outside through the through-hole and the exhaust port.

In one embodiment, the reinforcement portion may include a rib-shaped reinforcement member disposed in the auxiliary space and connected to the receiving bottom side or the body bottom side.

In one embodiment, the flow path may include a cooling flow path disposed along the rib-shaped reinforcement member, the cooling flow path being configured to circulate a coolant.

In one embodiment, the battery assembly according to the present disclosure may further comprise a through-hole penetrating the receiving bottom side; and an exhaust port penetrating the receiving case, wherein the flow path may include a venting flow path disposed along the rib-shaped reinforcement member, the venting flow path communicating the receiving space with the outside through the through-hole and the exhaust port.

In one embodiment, the reinforcement member may include a block disposed apart from the receiving bottom side and the body bottom side; first ribs extending inclinedly from the block to the receiving bottom side and the body bottom side, respectively; and second ribs extending inclinedly from the block to the receiving bottom side and the body bottom side, respectively, at angles different from those of the first ribs.

In one embodiment, the first ribs and the second ribs of the reinforcement member may converge toward a predetermined position on the receiving bottom side or the body bottom side.

In one embodiment, the reinforcement member may further comprise third ribs inclinedly extending from the position into the auxiliary space; connecting ribs extending in parallel with the receiving bottom side from the block; and fourth ribs vertically connecting the third ribs and the connecting ribs.

In one embodiment, the reinforcement portion may include a reinforcement member having a polygonal-shaped separation space connected to the receiving bottom side and the body bottom side in the auxiliary space.

In one embodiment, the reinforcement member may include open ends that are open at both ends along a direction toward the receiving bottom side and the body bottom side, and the open ends are covered by the receiving bottom side and the body bottom side.

In one embodiment, the flow path may include a cooling flow path, and the cooling flow path may passe through the partition walls forming the reinforcement member to circulate a coolant.

In one embodiment, the battery assembly according to the present disclosure may further comprise a through-hole penetrating the receiving bottom side; and an exhaust port penetrating the receiving case, wherein the flow path may include a venting flow path disposed to penetrate partition walls forming the reinforcement member, and the venting flow path may communicate the receiving space with the outside through the through-hole and the exhaust port.

In one embodiment, the reinforcement portion may include an impact-absorbing material disposed in the auxiliary space and in contact with the receiving bottom side, the body bottom side, and the flow path.

In one embodiment, the flow path may include a cooling flow path for circulating a coolant.

In one embodiment, the battery assembly according to the present disclosure may further comprise: a through-hole penetrating the receiving bottom side; and an exhaust port penetrating the receiving case, wherein the flow path further may include a venting flow path that communicates the receiving space with the outside through the through-hole and the exhaust port.

In one embodiment, the venting flow path may be provided in plurality, and the cooling flow path may be disposed between the plurality of venting flow paths.

According to an embodiment of the disclosure as described above, the structural stability of the battery assembly can be improved.

According to another embodiment of the present disclosure, the battery assembly can be protected from vibrations or impacts that may be applied to the lower portion of the battery assembly.

According to yet another embodiment of the present disclosure, the thermal stability of the battery assembly can be improved.

According to still another embodiment of the present disclosure, the space within the battery assembly can be utilized efficiently.

### BRIEF DESCRIPTION OF THE DRAWINGS

FIG. 1 is an exploded view of a battery assembly according to the present disclosure.
FIG. 2 is a cross-sectional view of one part of the battery assembly according to the present disclosure, taken along the direction A-A' of FIG. 1.
FIG. 3 is another cross-sectional view of the battery assembly according to the present disclosure, taken along the direction A-A' of FIG. 1.
FIG. 4 is another cross-sectional view of the battery assembly according to the present disclosure, taken along the direction A-A' of FIG. 1.
FIG. 5 is an enlarged view of S1 in FIG. 3 or S2 in FIG. 4.
FIG. 6 illustrates an example of a reinforcement portion and a cooling flow path according to the present disclosure.
FIG. 7 illustrates an example of a reinforcement portion and a venting flow path according to the present disclosure.
FIG. 8 illustrates another example of a reinforcement portion and a cooling flow path according to the present disclosure.
FIG. 9 illustrates another example of a reinforcement portion and a venting flow path according to the present disclosure.
FIG. 10 illustrates another example of a reinforcement portion according to the present disclosure.
FIG. 11 illustrates another example of a reinforcement portion and a flow path according to the present disclosure.
FIG. 12 illustrates another example of a reinforcement portion and a flow path according to the present disclosure.

### DETAILED DESCRIPTION

Hereinafter, preferred embodiments of the present disclosure will be described in detail with reference to the accompanying drawings. The configurations or control methods of the devices described below are merely for the purpose of explaining the embodiments of the present disclosure, and are not intended to limit the scope of the present disclosure. Reference numerals used consistently throughout the specification refer to the same elements.

The specific terms used in the present specification are merely for convenience of explanation and are not intended to limit the disclosed embodiments.

In the present specification, the terms battery, secondary battery, and cell all refer to a rechargeable battery cell capable of charging and discharging.

In addition, the term battery assembly in the present specification may refer to any one of a battery module including a plurality of battery cells, a battery pack, or an energy storage system.

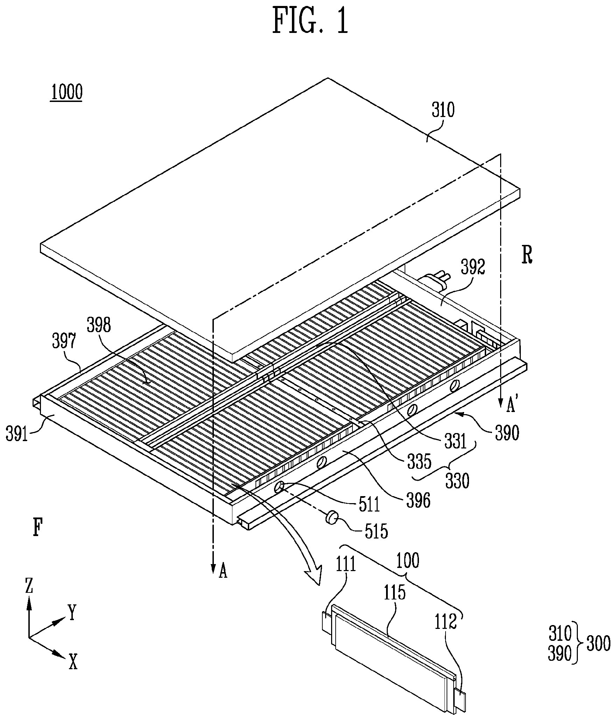

FIG. 1 is an exploded view of a battery assembly 1000 according to the present disclosure.

Referring to FIG. 1, the battery assembly 1000 according to the present disclosure may include a plurality of battery cells 100 and a receiving case 300 forming a receiving space 398 that accommodates the plurality of battery cells 100.

Each battery cell 100 may include a body portion 115 that houses an electrode assembly (not shown) for generating or storing electrical energy, and lead tab portions 111, 112 that are electrically connected to the electrode assembly and protrude outward from the body portion 115. The lead tab portions 111, 112 may be electrically connected to a bus bar.

Referring to FIG. 1, although the battery cell 100 is shown as a pouch-type battery cell, the shape of the battery cell 100 in the present disclosure is not limited to the pouch-type. That is, the battery assembly 1000 according to the present disclosure may include prismatic or cylindrical battery cells 100.

Referring to FIG. 1, the battery assembly 1000 according to the present disclosure may accommodate the plurality of battery cells 100 in the receiving space 398. The plurality of battery cells 100 may be stacked along a predetermined stacking direction.

Although FIG. 1 illustrates an example in which the plurality of battery cells 100 are stacked in the Y-direction, the battery cells 100 may also be stacked in other directions.

The receiving case 300 may include a receiving cover 310 and a receiving body 390 that together form the receiving space 398. Referring to FIG. 1, the receiving body 390 may have one side that is open. The receiving cover 310 may be coupled to the receiving body 390 to cover the open side of the receiving body 390.

In addition, the receiving case 300 may include a partition portion 330 configured to divide the receiving space 398 into a plurality of sub-spaces. The partition portion 330 may include a first frame 331 extending in the Y-direction and a second frame 335 extending in the X-direction within the receiving space 398.

FIG. 1 shows an example in which the plurality of battery cells 100 are grouped in a predetermined number and arranged in two columns along the Y-direction. FIG. 1 also illustrates that the battery cells 100 are arranged in two rows along the X-direction. However, this is merely one example, and the arrangement and number of the sub-spaces may be modified in various ways, and accordingly, the number of rows and columns may also vary.

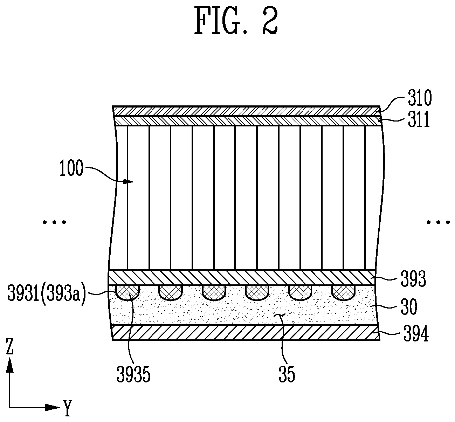

The receiving body 390 may include a receiving bottom side 393 that forms the bottom side of the receiving space 398, and a body bottom side 394 that forms the bottom side of an auxiliary space 35 located below the receiving bottom side 393 (see FIG. 2).

The receiving body 390 may also include body sidewalls 391, 392, 396, 397 that form the side surfaces of the receiving space 398 and the auxiliary space 35.

In the present specification, the front F and rear R directions are defined merely for ease of description and understanding; therefore, the front and rear of the battery assembly 1000 according to the present disclosure are not limited to those depicted in the drawings.

The receiving case 300 may further include an exhaust port 511 that passes through one surface of the receiving case 300 and communicates the inside of the receiving space 398 with the outside.

The exhaust port 511 may normally be closed by a protective cover 515. When an event such as thermal runaway of the battery cell 100 occurs, the protective cover 515 may rupture, allowing gas generated inside the receiving space 398 to be discharged to the outside through the exhaust port 511.

If the cathode and anode inside the battery cell 100 come into unintended contact, the internal temperature of the battery cell 100 may rise rapidly, causing thermal runaway. As a result, when the battery cell 100 expands, the case of the battery cell 100 may rupture or tear, thereby releasing fluid, particles mixed in the fluid, and/or flame into the receiving space 398.

Specifically, when the thermal runaway of a battery cell 100 begins to propagate to adjacent battery cells 100, the temperature and pressure inside the receiving space 398 will increase. Considering user safety, it is necessary to quickly discharge the fluid and/or particles generated by thermal runaway from the receiving space 398 to the outside. To this end, the protective cover 515 may be configured to rupture or burst when the pressure in the receiving space 398 exceeds a predetermined allowable pressure. That is, when the pressure exceeds the allowable threshold, the protective cover 515 may be separated from the exhaust port 511, thereby allowing the receiving space 398 to communicate with the outside through the exhaust port 511.

The protective cover 515 may be referred to as a rupture disc. To allow the protective cover 515 to separate from the exhaust port 511 when the pressure exceeds the allowable pressure, the material of the protective cover 515 may differ from that of the receiving case 300. For example, the protective cover 515 may be made of a polymer material, whereas the receiving case 300 may be made of a metal material.

FIG. 2 is a cross-sectional view of one part of the battery assembly 1000 according to the present disclosure, taken along the direction A-A' of FIG. 1.

The battery assembly 1000 according to the present disclosure may comprise: a plurality of battery cells 100; a receiving case 300 forming a receiving space 398 that accommodates the battery cells 100, and an auxiliary space 35 arranged separately from the receiving space 398; a receiving bottom side 393 forming the bottom side of the receiving space 398 and positioned between the receiving space 398 and the auxiliary space 35; a body bottom side 394, spaced apart from the receiving bottom side 393 and facing it, that forms the bottom side of the auxiliary space 35; a flow path (393a) located in the auxiliary space (35) and in contact with the receiving bottom side 393; and a reinforcement portion 30 located outside the flow path 393a within the auxiliary space 35 and supporting both the receiving bottom side 393 and the body bottom side 394.

The receiving case 300 may include the receiving space 398 and the auxiliary space 35 in its interior. The receiving space 398 and the auxiliary space 35 may be arranged adjacent to each other with the receiving bottom side 393 positioned between them.

In one example, the receiving space 398 and the auxiliary space 35 may be vertically arranged along the height direction of the receiving case 300.

The receiving space 398 accommodates the battery cells 100, while the auxiliary space 35 may accommodate the flow path 393a for thermal management of the battery cells 100 and the reinforcement portion 30 to improve the structural stability of the receiving case 300.

To this end, the bottom side of the receiving case 300 may have a dual-layer structure formed by the receiving bottom side 393 and the body bottom side 394. The reinforcement portion 30 may be disposed between these two layers, such that the bottom of the receiving case 300 forms a kind of sandwich structure.

The battery assembly 1000 according to the present disclosure may further include an insulating cover 311 between the receiving cover 310 and the receiving body 390.

The flow path 393a may serve as a path for thermal management or venting during thermal runaway of the battery cells 100.

For example, the flow path 393a may be a cooling flow path 3931 through which a coolant 3935 circulates. The cooling flow path 3931 may be attached to one surface of the receiving bottom side 393, allowing heat transferred through the receiving bottom side 393 to be exchanged with the coolant 3935.

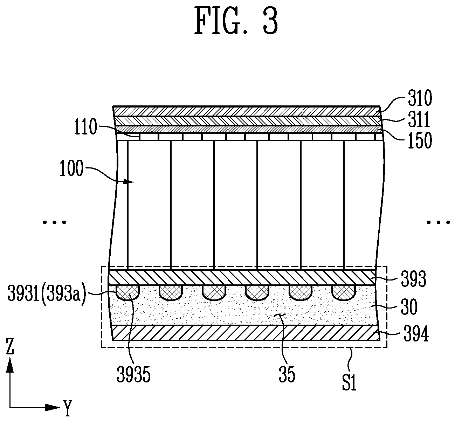

FIG. 3 is another cross-sectional view of the battery assembly 1000 according to the present disclosure, taken along the direction A-A' of FIG. 1.

A battery assembly 1000 according to the present disclosure may include: a plurality of battery cells 100; a receiving case 300 forming a receiving space 398 configured to accommodate the plurality of battery cells 100 and an auxiliary space 35 disposed apart from the receiving space 398; a receiving bottom side 393 forming a bottom side of the receiving space 398 and disposed between the receiving space 398 and the auxiliary space 35; a body bottom side 394 disposed apart from the receiving bottom side 393, facing the receiving bottom side 393, and forming a bottom side of the auxiliary space 35; a flow path 393a disposed in the auxiliary space 35 and in contact with the receiving bottom side 393; and a reinforcement portion 30 disposed in the auxiliary space 35 outside the flow path 393a and configured to support the receiving bottom side 393 and the body bottom side 394.

As described above, the type of battery cell 100 included in the battery assembly 1000 may be a pouch type, cylindrical type, or prismatic type. FIG. 2 illustrates a pouch-type battery cell, whereas FIGS. 3, 4, and 12 illustrate cylindrical battery cells.

In the case where the battery cells 100 are cylindrical, each of the battery cells 100 may include a terminal portion 110 having either positive or negative polarity.

Referring to FIG. 3, the terminal portion 110 may protrude from each battery cell 100 in the direction toward the receiving cover 310.

Accordingly, the battery assembly 1000 according to the present disclosure may further include an insulating cover 311 between the receiving cover 310 and the receiving body 390. In addition, the battery assembly 1000 according to the present disclosure may further include a busbar 150 between the insulating cover 311 and the terminal portions 110. The busbar 150 may serve as a passage for electrically connecting the plurality of battery cells 100 to the outside.

The receiving case 300 may include, inside, the receiving space 398 and the auxiliary space 35. The receiving space 398 and the auxiliary space 35 may be arranged adjacent to each other with the receiving bottom side 393 therebetween.

For example, the receiving space 398 and the auxiliary space 35 may be arranged vertically along the height direction of the receiving case 300.

The receiving space 398 accommodates the plurality of battery cells 100, and the auxiliary space 35 may accommodate a flow path 393a for thermal management of the plurality of battery cells 100 and a reinforcement portion 30 for improving the structural stability of the receiving case 300.

To this end, the bottom side of the receiving case 300 may have a dual-layer structure including the receiving bottom side 393 and the body bottom side 394. The reinforcement portion 30 is disposed between the receiving bottom side 393 and the body bottom side 394, and the bottom side of the receiving case 300 may be formed in a so-called sandwich structure.

The flow path 393a may be used for thermal management or venting in the event of thermal runaway of the battery cells 100.

For example, the flow path 393a may be a cooling flow path 3931 in which a coolant 3935 circulates. The cooling flow path 3931 may be coupled to one surface of the receiving bottom side 393, so that the coolant 3935 can exchange heat with the heat transferred through the receiving bottom side 393. Meanwhile, the combination of the cooling flow path 3931 and the receiving bottom side 393 may be referred to as a cooling plate.

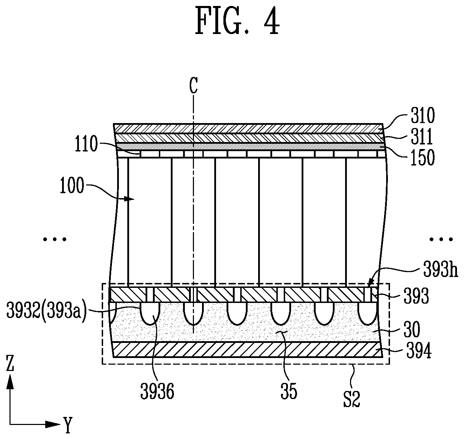

FIG. 4 is another cross-sectional view of the battery assembly 1000 according to the present disclosure, taken along the direction A-A' of FIG. 1.

The receiving bottom side 393 may further include a through-hole 393h penetrating through the receiving bottom side 393. The through-hole 393h may be provided to rapidly discharge gas to the outside when gas is generated due to thermal runaway of any one of the plurality of battery cells 100. To this end, the flow path 393a may include a venting flow path 3932 that connects the through-hole 393h and the exhaust port 511, and communicates the receiving space 398 with the outside.

The venting flow path 3932 may include a venting space 3936 therein, and the venting space 3936 may communicate with the receiving space 398 through the through-hole 393h, and with the outside through the exhaust port 511.

Referring to FIG. 4, the through-hole 393h may be disposed to overlap with the terminal portion 110. Accordingly, a virtual central axis C of the cylindrical battery cell 100 may pass through the terminal portion 110 and the through-hole 393h.

Similarly, the reinforcement portion 30 may be disposed in the auxiliary space 35.

Referring to FIGS. 3 and 4, the reinforcement portion 30 reinforces the lower structure of the battery assembly 1000, and may protect the plurality of battery cells 100 accommodated in the receiving space 398 from impacts or vibrations.

That is, the reinforcement portion 30 may be separated from the receiving space 398 and the outside, and perform an independent function such as shock absorption.

The auxiliary space 35 may include the reinforcement portion 30 and the flow path 393a, which allows compact utilization of a limited space.

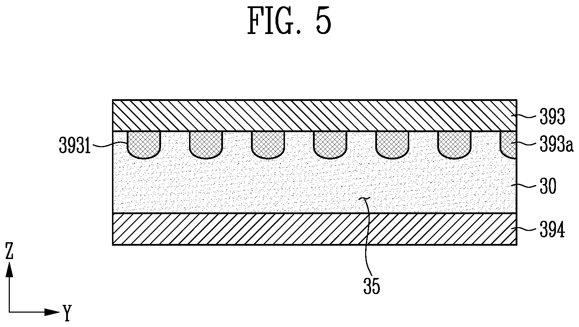

FIG. 5 is an enlarged view of S1 in FIG. 3 or S2 in FIG. 4.

The auxiliary space 35 may be formed between the receiving bottom side 393 and the body bottom side 394. The flow path 393a and the reinforcement portion 30 may be disposed within the auxiliary space 35.

The flow path 393a may include at least one or a combination of the cooling flow path 3931 and the venting flow path 3932. When the flow path 393a includes both the cooling flow path 3931 and the venting flow path 3932, a plurality of venting flow paths 3932 may be provided, and the cooling flow path 3931 may be disposed between the plurality of venting flow paths 3932. That is, the cooling flow path 3931 may be formed in a zigzag shape to avoid interference with the plurality of venting flow paths 3932.

The reinforcement portion 30 may fill all remaining space in the auxiliary space 35 excluding the space occupied by the flow path 393a. Alternatively, the reinforcement portion 30 may include reinforcement members that are disposed so as to avoid interference with the flow path 393a.

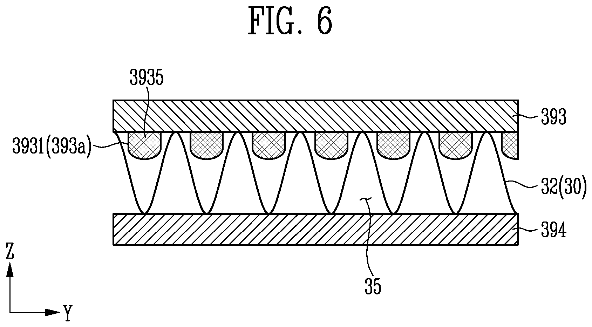

FIG. 6 illustrates an example of a reinforcement portion 30 and a cooling flow path 3931 according to the present disclosure.

The battery assembly 1000 according to the present disclosure may include the reinforcement portion 30 and the flow path 393a located in the auxiliary space 35.

The flow path 393a may include a cooling flow path formed along the wavy-shaped reinforcement member to circulate a refrigerant.

The cooling flow path 3931 may be disposed on a surface of the receiving bottom side 393 facing the auxiliary space 35 for heat exchange.

Meanwhile, the reinforcement portion 30 may include wavy-shaped reinforcement members 32 that are in contact with the receiving bottom side 393 and the body bottom side 394 within the auxiliary space 35.

The reinforcement members 32 may be disposed in the auxiliary space 35 so as to avoid interference with the cooling flow path 3931. That is, the cooling flow path 3931 may be disposed in the spaces formed separately by the reinforcement members 32.

Due to the wavy shape, the reinforcement members 32 may alternately contact the receiving bottom side 393 and the body bottom side 394. In addition, because of the wavy shape, when external force is applied to the body bottom side 394, the reinforcement members 32 may absorb impact to a certain extent.

The pitch and amplitude of the reinforcement members 32, as well as the spacing of the cooling flow paths 3931, may be varied depending on the design.

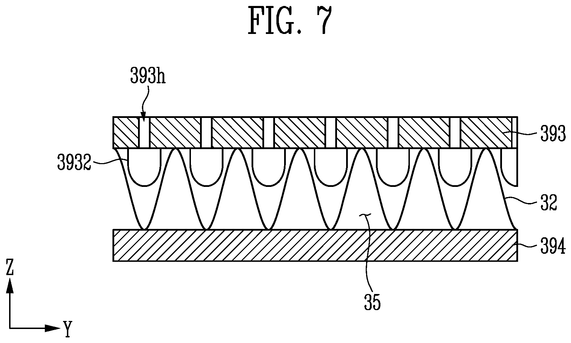

FIG. 7 illustrates an example of a reinforcement portion and a venting flow path 3932 according to the present disclosure.

The battery assembly 1000 according to the present disclosure may further include a through-hole 393h penetrating the receiving bottom side 393 and an exhaust port 511 (see FIG. 1) penetrating the receiving case 300, and the flow path 393a may be formed along the wavy-shaped reinforcement member 32, and may include a venting flow path 3932 that communicates the receiving space 398 with the outside through the through-hole 393h and the exhaust port 511.

As in FIG. 6, the reinforcement members 32 may be disposed in the auxiliary space 35 so as to avoid interference with the venting flow path 3932. That is, the venting flow path 3932 may be disposed in the spaces separately formed by the reinforcement members 32 through a separation space 325.

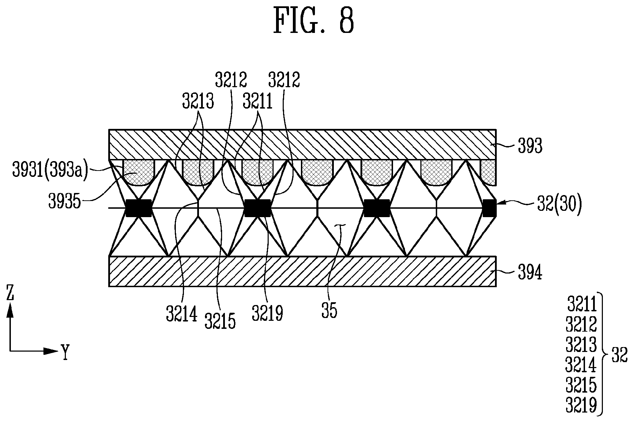

FIG. 8 illustrates another example of a reinforcement portion and a cooling flow path 3931 according to the present disclosure.

The battery assembly 1000 according to the present disclosure may include a reinforcement portion 30 and a flow path 393a located in the auxiliary space 35. The reinforcement portion 30 may include a rib-shaped reinforcement member 32 connecting the receiving bottom side 393 or the body bottom side 394 within the auxiliary space 35.

In one embodiment, the flow path 393a may be disposed along the rib-shaped reinforcement member 32 and may include a cooling flow path 3931 for circulating a coolant.

In one embodiment, the reinforcement member 32 may include a block 3219 disposed apart from the receiving bottom side 393 and the body bottom side 394; first ribs 3211 extending inclinedly from the block 3219 to the receiving bottom side 393 and the body bottom side 394, respectively; and second ribs 3212 extending inclinedly from the block 3219 to the receiving bottom side 393 and the body bottom side 394, respectively, at angles different from those of the first ribs.

In one embodiment, the first ribs 3211 and the second ribs 3212 of the reinforcement member 32 may converge toward a predetermined position of the receiving bottom side 393 or the body bottom side 394.

As the first ribs 3211 and the second ribs 3212 converge at the location, when an external force is applied to the body bottom side 394, the external force is transmitted to the block 3219 through the first ribs 3211 and the second ribs 3212 that are disposed between the block 3219 and the body bottom side 394, and then the external force is further transmitted from the block 3219 to the receiving bottom side 393 through the first ribs 3211 and the second ribs 3212 that are disposed between the block 3219 and the receiving bottom side 393. In this process, a portion of the external force may be absorbed by the first ribs 3211 and/or the second ribs 3212, thereby reducing the external force applied to the receiving bottom side 393.

To this end, the reinforcement member 32 may further comprise third ribs 3212 inclinedly extending from the position into the auxiliary space 35, connecting ribs 3215 extending in parallel with the receiving bottom side 393 from the block 3219, and fourth ribs 3214 vertically connecting the third ribs 3213 and the connecting ribs 3215.

The pattern of the reinforcement member 32 formed by the first ribs 3211, second ribs 3212, third ribs 3213, fourth ribs 3214, connecting ribs 3215, and the block 3219 may be repeated.

The reinforcement member 32, through the connection structure of the first ribs 3211, second ribs 3212, third ribs 3213, fourth ribs 3214, connecting ribs 3215, and the block 3219, may be elastically deformable under a certain level of external force.

The cooling flow path 3931 may be disposed in the space formed between the first ribs 3211 and second ribs 3212 located between the block 3219 and the receiving bottom side 393. The interval of the cooling flow path 3931 and the repeating pattern of the reinforcement member 32) may vary depending on the design.

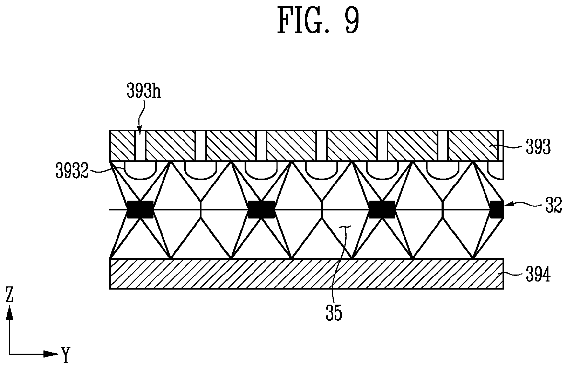

FIG. 9 illustrates another example of a reinforcement portion 30 and a venting flow path 3932 according to the present disclosure.

In one embodiment, the battery assembly 1000 may further include a through-hole 393h formed through the receiving bottom side 393, and an exhaust port 511 formed through the receiving case 300. The flow path 393a may be disposed along the rib-shaped reinforcement member 32 and may include a venting flow path 3932 that communicates the receiving space 398 with the outside through the through-hole 393h and the exhaust port 511.

As in FIG. 8, the reinforcement member 32 may be disposed in the auxiliary space 35 to avoid interference with the venting flow path 3932. That is, the venting flow path 3932 may be disposed in the space formed between the first ribs 3211 and the second ribs 3212 located between the block 3219 and the receiving bottom side 393.

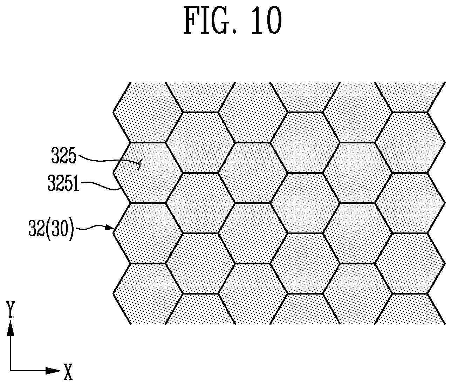

FIG. 10 illustrates another example of a reinforcement portion 30 according to the present disclosure.

The battery assembly 1000 according to the present disclosure may include a reinforcement portion 30 located in the auxiliary space 35. The reinforcement portion 30 may include a reinforcement member 32 having a polygonal-shaped separation space 325 that connects the receiving bottom side 393 and the body bottom side 394 within the auxiliary space 35.

In one example, the polygon may be a hexagonal shape. The hexagonal-shaped reinforcement member 32 may be referred to as a honeycomb structure.

The reinforcement member 32 may include open ends that are open at both ends along a direction toward the receiving bottom side 393 and the body bottom side 394, and the open ends are covered by the receiving bottom side 393 and the body bottom side 394.

Thus, the partition walls 3251 forming the reinforcement member 32 may connect the receiving bottom side 393 and the body bottom side 394.

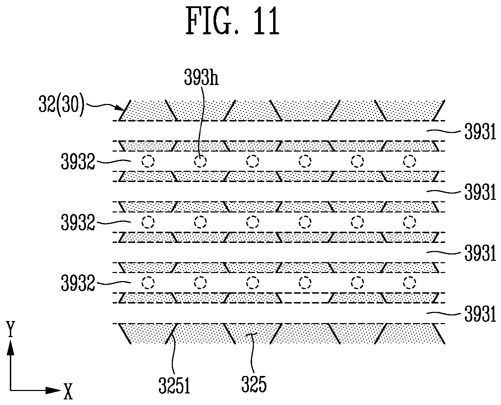

FIG. 11 illustrates another example of a reinforcement portion 30 and a flow path 393a according to the present disclosure.

The battery assembly 1000 may further include a flow path 393a located in the auxiliary space 35.

The flow path 393a may pass through the partition walls 3251 forming the reinforcement member 32 and may include a cooling flow path 3931 for circulating a coolant.

Alternatively, the battery assembly 1000 may further include a through-hole 393h formed through the receiving bottom side 393, and an exhaust port 511 formed through the receiving case 300, and the flow path 393a may be disposed through the partition walls 3251 forming the reinforcement member 32, and may include a venting flow path 3932 that communicates the receiving space 398 with the outside through the through-hole 393h and the exhaust port 511.

The battery assembly 1000 may include both the cooling flow path 3931 and the venting flow path 3932.

Although the cooling flow path 3931 is a single flow path, it may have a zigzag shape, and as shown in FIG. 11, when partially enlarged, the cooling flow path 3931 and the venting flow path 3932 may be alternately arranged.

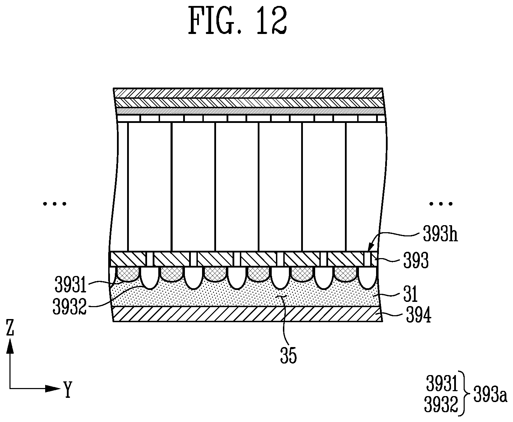

FIG. 12 illustrates another example of a reinforcement portion 30 and a flow path 393a according to the present disclosure.

The battery assembly 1000 may include a reinforcement portion 30 and a flow path 393a located in the auxiliary space 35.

The reinforcement portion 30 may be an impact-absorbing material 31 injected into the auxiliary space 35.

The impact-absorbing material 31 may increase in rigidity upon receiving an external impact, thereby absorbing the force transmitted to the plurality of battery cells 100 disposed in the receiving space 398.

In one example, the yield value of the impact-absorbing material may be at least 1.385×10⁵ (N/m²).

The impact-absorbing material 31may be a non-Newtonian fluid in contact with the receiving bottom side 393, the body bottom side 394, and the flow path 393a in the auxiliary space 35.

The non-Newtonian fluid may also be referred to as a viscoelastic fluid or a plastic fluid. A non-Newtonian fluid is a fluid that does not follow Newton's law of viscosity or does not have a constant viscosity. For example, it may be a dilatant fluid, a Bingham plastic fluid, or a pseudoplastic fluid.

The flow path 393a may include a cooling flow path 3931 for circulating coolant. The flow path 393a may further include a venting flow path 3932 that communicates the receiving space 398 with the outside.

That is, the battery assembly 1000 may further include a through-hole 393h formed through the receiving bottom side 393, and an exhaust port 511 formed through the receiving case 300, and the flow path 393a may include the venting flow path 3932 that communicates the receiving space 398 with the outside through the through-hole 393h and the exhaust port 511.

Meanwhile, the venting flow paths 3932 may be provided as a plurality, and the cooling flow path 3931 may be disposed between the plurality of venting flow paths 3932. Although the cooling flow path 3931 is a single path, because it has a zigzag shape, when viewed as a cross-sectional enlargement (FIG. 12), the cooling flow path 3931 and the venting flow paths 3932 may be alternately arranged.

It is understood by those skilled in the art that the plurality of exemplary embodiments described above are specific examples of the following aspects.

Aspect 1. A battery assembly 1000 comprising: a plurality of battery cells 100; a housing case 300 forming a receiving space 398 configured to accommodate the plurality of battery cells 100, and an auxiliary space 35 disposed apart from the receiving space 398; a receiving bottom side 393 forming a bottom side of the receiving space 398 and disposed between the receiving space 398 and the auxiliary space 35; a body bottom side 394 disposed apart from the receiving bottom side 393 and facing the receiving bottom side 393 to form a bottom side of the auxiliary space 35; a flow path 393a disposed in the auxiliary space 35 and in contact with the receiving bottom side 393; and a reinforcement portion 30 disposed outside the flow path 393a in the auxiliary space 35 and configured to support the receiving bottom side 393 and the body bottom side 394.

Aspect 2. The battery assembly 1000 according to aspect 1, wherein the reinforcement portion 30 includes a wavy-shaped reinforcement member 32 disposed in the auxiliary space 35 and in contact with the receiving bottom side 393 and the body bottom side 394.

Aspect 3. The battery assembly 1000 according to aspect 2, wherein the flow path 393a includes a cooling flow path 3931 formed along the wavy-shaped reinforcement member 32 to circulate a refrigerant.

Aspect 4. The battery assembly 1000 according to aspect 2 or 3, further comprises a through-hole 393h penetrating the receiving bottom side 393; and an exhaust port 511 penetrating the receiving case, wherein the flow path 393a includes a venting flow path 3932 formed along the wavy-shaped reinforcement members 32, and the venting flow path 3932 communicates the receiving space 398 with the outside through the through-hole 393h and the exhaust port 511.

Aspect 5. The battery assembly 1000 according to any one of the previous aspects, wherein the reinforcement portion 30 includes a rib-shaped reinforcement member 32 disposed in the auxiliary space 35 and connected to the receiving bottom side 393 or the body bottom side 394, optionally wherein the flow path 393a includes a cooling flow path 3931 disposed along the rib-shaped reinforcement member 32, the cooling flow path 3931 being configured to circulate a coolant.

Aspect 6. The battery assembly 1000 according to aspect 5, further comprises a through-hole 393h penetrating the receiving bottom side 393; and an exhaust port 511 penetrating the receiving case, wherein the flow path 393a includes a venting flow path 3932 disposed along the rib-shaped reinforcement member 32, the venting flow path 3932 communicating the receiving space 398 with the outside through the through-hole 393h and the exhaust port 511.

Aspect 7. The battery assembly 1000 according to aspect 5, wherein the reinforcement member includes: a block 3219 disposed apart from the receiving bottom side 393 and the body bottom side 394; first ribs 3211 extending inclinedly from the block 3219 to the receiving bottom side 393 and the body bottom side 394, respectively; and second ribs 3212 extending inclinedly from the block 3219 to the receiving bottom side 393 and the body bottom side 394, respectively, at angles different from those of the first ribs 3211.

Aspect 8. The battery assembly 1000 according to aspect 7, wherein the first ribs 3211 and the second ribs 3212 of the reinforcement member converge toward a predetermined position on the receiving bottom side 393 or the body bottom side 394.

Aspect 9. The battery assembly 1000 according to aspect 8, wherein the reinforcement member further comprises third ribs 3213 inclinedly extending from the position into the auxiliary space 35; connecting ribs 3215 extending in parallel with the receiving bottom side 393 from the block 3219; and fourth ribs vertically connecting the third ribs 3213 and the connecting ribs 3215.

Aspect 10. The battery assembly 1000 according to any one of the previous aspects, wherein the reinforcement portion 30 includes a reinforcement member 32 having a polygonal-shaped separation space 325 connected to the receiving bottom side 393 and the body bottom side 394 in the auxiliary space 35.

Aspect 11. The battery assembly 1000 according to aspect 10, wherein the reinforcement member 32 includes open ends that are open at both ends along a direction toward the receiving bottom side 393 and the body bottom side 394 respectively, and the open ends are covered by the receiving bottom side 393 and the body bottom side 394, optionally, wherein the flow path 393a includes a cooling flow path 3931, and the cooling flow path 3931 passes through the partition walls 3251 forming the reinforcement member 32 to circulate a coolant.

Aspect 12. The battery assembly 1000 according to aspect 10, further comprises a through-hole 393h penetrating the receiving bottom side 393; and an exhaust port 511 penetrating the receiving case, wherein the flow path 393a includes a venting flow path 3932 disposed to penetrate the partition walls 3251 forming the reinforcement member 32, and the venting flow path 3932 communicates the receiving space 398 with the outside through the through-hole 393h and the exhaust port 511.

Aspect 13. The battery assembly 1000 according to any one of the previous aspects, wherein the reinforcement portion 30 includes an impact-absorbing material 31 disposed in the auxiliary space 35 and in contact with the receiving bottom side 393, the body bottom side 394, and the flow path 393a, optionally, wherein the flow path 393a includes a cooling flow path 3931 for circulating a coolant.

Aspect 14. The battery assembly 1000 according to aspect 13, further comprises a through-hole 393h penetrating the receiving bottom side 393; and an exhaust port 511 penetrating the receiving case, wherein the flow path 393a further includes a venting flow path 3932 that communicates the receiving space 398 with the outside through the through-hole 393h and the exhaust port 511.

Aspect 15. The battery assembly 1000 according to aspect 14, wherein the venting flow path 3932 is provided in plurality, and the cooling flow path 3931 is disposed between the plurality of venting flow paths 3932.

This disclosure may be modified and implemented in various forms and is not limited to the aforementioned embodiments. Therefore, if a modified embodiment includes the components of the claims, it should be regarded as being within the scope of the present disclosure.

## Claims

1. A battery assembly (1000) comprising:
a plurality of battery cells (100);
a housing case (300) forming a receiving space (398) configured to accommodate the plurality of battery cells (100), and an auxiliary space (35) disposed apart from the receiving space (398);
a receiving bottom side (393) forming a bottom side of the receiving space (398) and disposed between the receiving space (398) and the auxiliary space (35);
a body bottom side (394) disposed apart from the receiving bottom side (393) and facing the receiving bottom side (393) to form a bottom side of the auxiliary space (35);
a flow path (393a) disposed in the auxiliary space (35) and in contact with the receiving bottom side (393); and
a reinforcement portion (30) disposed outside the flow path (393a) in the auxiliary space (35) and configured to support the receiving bottom side (393) and the body bottom side (394).

2. The battery assembly (1000) according to claim 1, wherein the reinforcement portion (30) includes a wavy-shaped reinforcement member (32) disposed in the auxiliary space (35) and in contact with the receiving bottom side (393) and the body bottom side (394).

3. The battery assembly (1000) according to claim 2, wherein the flow path (393a) includes a cooling flow path (3931) formed along the wavy-shaped reinforcement member (32) to circulate a refrigerant.

4. The battery assembly (1000) according to claim 2 or 3, further comprises
a through-hole (393h) penetrating the receiving bottom side (393); and
an exhaust port (511) penetrating the receiving case,
wherein the flow path (393a) includes a venting flow path (3932) formed along the wavy-shaped reinforcement members (32), and the venting flow path (3932) communicates the receiving space (398) with the outside through the through-hole (393h) and the exhaust port (511).

5. The battery assembly (1000) according to any one of the previous claims, wherein the reinforcement portion (30) includes a rib-shaped reinforcement member (32) disposed in the auxiliary space (35) and connected to the receiving bottom side (393) or the body bottom side (394), optionally wherein the flow path (393a) includes a cooling flow path (3931) disposed along the rib-shaped reinforcement member (32), the cooling flow path (3931) being configured to circulate a coolant.

6. The battery assembly (1000) according to claim 5, further comprises a through-hole (393h) penetrating the receiving bottom side (393); and
an exhaust port (511) penetrating the receiving case,
wherein the flow path (393a) includes a venting flow path (3932) disposed along the rib-shaped reinforcement member (32), the venting flow path (3932) communicating the receiving space 398 with the outside through the through-hole (393h) and the exhaust port (511).

7. The battery assembly (1000) according to claim 5, wherein the reinforcement member includes:
a block (3219) disposed apart from the receiving bottom side (393) and the body bottom side (394);
first ribs (3211) extending inclinedly from the block (3219) to the receiving bottom side (393) and the body bottom side (394), respectively; and
second ribs (3212) extending inclinedly from the block (3219) to the receiving bottom side (393) and the body bottom side (394), respectively, at angles different from those of the first ribs (3211).

8. The battery assembly (1000) according to claim 7, wherein the first ribs (3211) and the second ribs (3212) of the reinforcement member converge toward a predetermined position on the receiving bottom side (393) or the body bottom side (394).

9. The battery assembly (1000) according to claim 8, wherein the reinforcement member further comprises
third ribs (3213) inclinedly extending from the position into the auxiliary space (35); connecting ribs (3215) extending in parallel with the receiving bottom side (393) from the block 3219; and
fourth ribs vertically connecting the third ribs (3213) and the connecting ribs (3215).

10. The battery assembly (1000) according to any one of the previous claims, wherein the reinforcement portion (30) includes a reinforcement member (32) having a polygonal-shaped separation space (325) connected to the receiving bottom side (393) and the body bottom side (394) in the auxiliary space (35).

11. The battery assembly (1000) according to claim 10, wherein the reinforcement member (32) includes open ends that are open at both ends along a direction toward the receiving bottom side (393) and the body bottom side (394) respectively, and the open ends are covered by the receiving bottom side (393) and the body bottom side (394), optionally, wherein the flow path (393a) includes a cooling flow path (3931), and the cooling flow path (3931) passes through the partition walls (3251) forming the reinforcement member (32) to circulate a coolant.

12. The battery assembly (1000) according to claim 10, further comprises a through-hole (393h) penetrating the receiving bottom side (393); and
an exhaust port (511) penetrating the receiving case,
wherein the flow path (393a) includes a venting flow path (3932) disposed to penetrate the partition walls (3251) forming the reinforcement member (32), and the venting flow path (3932) communicates the receiving space (398) with the outside through the through-hole (393h) and the exhaust port (511).

13. The battery assembly (1000) according to any one of the previous claims, wherein the reinforcement portion (30) includes an impact-absorbing material (31) disposed in the auxiliary space (35) and in contact with the receiving bottom side (393), the body bottom side (394), and the flow path (393a), optionally, wherein the flow path (393a) includes a cooling flow path (3931) for circulating a coolant.

14. The battery assembly (1000) according to claim 13, further comprises
a through-hole (393h) penetrating the receiving bottom side (393); and
an exhaust port (511) penetrating the receiving case,
wherein the flow path (393a) further includes
a venting flow path (3932) that communicates the receiving space (398) with the outside through the through-hole (393h) and the exhaust port (511).

15. The battery assembly (1000) according to claim 14, wherein the venting flow path (3932) is provided in plurality, and the cooling flow path (3931) is disposed between the plurality of venting flow paths (3932).

## Amended claims

### Amended claims in accordance with Rule 137(2) EPC.

1. A battery assembly (1000) comprising:
a plurality of battery cells (100);
a housing case (300) forming a receiving space (398) configured to accommodate the plurality of battery cells (100), and an auxiliary space (35) disposed apart from the receiving space (398);
a receiving bottom side (393) forming a bottom side of the receiving space (398) and disposed between the receiving space (398) and the auxiliary space (35);
a body bottom side (394) disposed apart from the receiving bottom side (393) and facing the receiving bottom side (393) to form a bottom side of the auxiliary space (35);
a flow path (393a) disposed in the auxiliary space (35) and in contact with the receiving bottom side (393); and
a reinforcement portion (30) disposed outside the flow path (393a) in the auxiliary space (35) and configured to support the receiving bottom side (393) and the body bottom side (394),
wherein the reinforcement portion (30) includes a reinforcement member (32) disposed in the auxiliary space (35) and connected to the receiving bottom side (393) or the body bottom side (394),
wherein
the reinforcement member (32) includes:
a block (3219) disposed apart from the receiving bottom side (393) and the body bottom side (394);
first ribs (3211) extending inclinedly from the block (3219) to the receiving bottom side (393) and the body bottom side (394), respectively; and
second ribs (3212) extending inclinedly from the block (3219) to the receiving bottom side (393) and the body bottom side (394), respectively, at angles different from those of the first ribs (3211),
wherein the first ribs (3211) and the second ribs (3212) of the reinforcement member converge toward a predetermined position on the receiving bottom side (393) or the body bottom side (394);
third ribs (3213) inclinedly extending from the position into the auxiliary space (35);
connecting ribs (3215) extending in parallel with the receiving bottom side (393) from the block 3219; and
fourth ribs vertically connecting the third ribs (3213) and the connecting ribs (3215).

2. The battery assembly (1000) according to claim 1, wherein the flow path (393a) includes a cooling flow path (3931) disposed along the rib-shaped reinforcement member (32), the cooling flow path (3931) being configured to circulate a coolant.

3. The battery assembly (1000) according to claim 1 or 2, further comprises
a through-hole (393h) penetrating the receiving bottom side (393); and
an exhaust port (511) penetrating the receiving case,
wherein the flow path (393a) includes a venting flow path (3932) disposed along the rib-shaped reinforcement member (32), the venting flow path (3932) communicating the receiving space 398 with the outside through the through-hole (393h) and the exhaust port (511).

4. The battery assembly (1000) according to any one of the previous claims, wherein the reinforcement portion (30) includes a reinforcement member (32) having a polygonal-shaped separation space (325) connected to the receiving bottom side (393) and the body bottom side (394) in the auxiliary space (35).

5. The battery assembly (1000) according to claim 4, wherein the reinforcement member (32) includes open ends that are open at both ends along a direction toward the receiving bottom side (393) and the body bottom side (394) respectively, and the open ends are covered by the receiving bottom side (393) and the body bottom side (394), optionally, wherein the flow path (393a) includes a cooling flow path (3931), and the cooling flow path (3931) passes through the partition walls (3251) forming the reinforcement member (32) to circulate a coolant.

6. The battery assembly (1000) according to claim 4, further comprises
a through-hole (393h) penetrating the receiving bottom side (393); and
an exhaust port (511) penetrating the receiving case,
wherein the flow path (393a) includes a venting flow path (3932) disposed to penetrate the partition walls (3251) forming the reinforcement member (32), and the venting flow path (3932) communicates the receiving space (398) with the outside through the through-hole (393h) and the exhaust port (511).

7. The battery assembly (1000) according to any one of the previous claims, wherein the reinforcement portion (30) includes an impact-absorbing material (31) disposed in the auxiliary space (35) and in contact with the receiving bottom side (393), the body bottom side (394), and the flow path (393a), optionally, wherein the flow path (393a) includes a cooling flow path (3931) for circulating a coolant.

8. The battery assembly (1000) according to claim 7, further comprises
a through-hole (393h) penetrating the receiving bottom side (393); and
an exhaust port (511) penetrating the receiving case,
wherein the flow path (393a) further includes
a venting flow path (3932) that communicates the receiving space (398) with the outside through the through-hole (393h) and the exhaust port (511).

9. The battery assembly (1000) according to claim 8, wherein the venting flow path (3932) is provided in plurality, and the cooling flow path (3931) is disposed between the plurality of venting flow paths (3932).
